# EUROPÄISCHE PATENTSCHRIFT

(11) **EP 4 388 226 B1**
(45) Veröffentlichungstag und Bekanntmachung des Hinweises auf die Patenterteilung: **09.07.2025**
(21) Anmeldenummer: 22751085.6
(22) Anmeldetag: 18.07.2022
(51) Int. Cl.: F16H 57/00, F16H 57/08

(54) **TRANSPORTSICHERUNG MIT MONTAGELAGER**
TRANSPORTATION SAFEGUARD WITH INSTALLATION BEARING
DISPOSITIF D'IMMOBILISATION PENDANT LE TRANSPORT COMPRENANT UN PALIER DE MONTAGE

(30) Priorität: 20.08.2021 DE 102021209151
(43) Veröffentlichungstag der Anmeldung: 26.06.2024
(73) Patentinhaber: ZF Friedrichshafen AG, 88046 Friedrichshafen (DE)
(72) Erfinder: DE LAET, Wim, 2000 Antwerpen (BE); BOONEN, Andries, 88046 Friedrichshafen (DE); UYTTERHOEVEN, Pieter, 88046 Friedrichshafen (DE)
(74) Vertreter: ZF Friedrichshafen AG
(86) Internationale Anmeldenummer: PCT/EP2022/070030
(87) Internationale Veröffentlichungsnummer: WO 2023/020760

(56) Entgegenhaltungen:
- WO-A1-2021/004689
- WO-A1-2021/004689
- DE-A1- 102020 107 995

## Beschreibung

Die Erfindung betrifft ein Mittel nach dem Oberbegriff von Anspruch 1, eine Anordnung nach dem Oberbegriff von Anspruch 10 und ein Verfahren nach Anspruch 11. Aus dem Stand der Technik sind Transportsicherungen für Windkraftgetriebe bekannt. Ein Planetenträger der ersten Stufe, der von einer Eingangswelle getragen wird, muss beim Transport aufgrund des Fehlens der Eingangswelle gestützt werden. Mittels der Transportsicherung wird der Planetenträger in einer definierten Position gehalten. Herkömmliche Transportsicherungen fixieren den Planetenträger starr, das heißt ohne die Möglichkeit einer Relativbewegung in einem Gehäuse des Getriebes. So ein Mittel ist aus der DE102020107995A bekannt.

Der Erfindung liegt die Aufgabe zugrunde, eine verbesserte Transportsicherung verfügbar zu machen. Diese Aufgabe wird gelöst durch ein Mittel nach Anspruch 1, eine Anordnung nach Anspruch 10 und ein Verfahren nach Anspruch 11. Bevorzugte Weiterbildungen sind in den Unteransprüchen enthalten und ergeben sich aus nachfolgender Beschreibung.

Das erfindungsgemäße Mittel ist ausgebildet, einen Planetenträger während des Transports in einem gehäusefesten Bauteil zu fixieren. Ein gehäusefestes Bauteil ist ein Bauteil, das relativ zu einem Gehäuse starr fixiert ist, das heißt ohne die Möglichkeit einer Relativbewegung zwischen dem Bauteil und dem Gehäuse. Insbesondere kann es sich bei dem gehäusefesten Bauteil um das Gehäuse selbst oder einen Teil des Gehäuses handeln. Auch bei einem gehäusefest fixierten Hohlrad einer Planetenstufe handelt es sich um ein gehäusefestes Bauteil. Das genannte Hohlrad gehört vorzugsweise zur selben Planetenstufe wie der zu fixierende Planetenträger.

Das Mittel besteht aus mindestens zwei Teilen. Ein erster Teil ist ausgebildet, mit dem gehäusefesten Bauteil gefügt zu werden. Ein zweiter Teil ist ausgebildet, mit dem Planetenträger gefügt zu werden. Durch das Fügen der beiden Teile kommen Fügeverbindungen zwischen dem jeweiligen Teil und dem gehäusefesten Bauteil bzw. dem Planetenträger zustande. Die Fügeverbindungen sind bevorzugt lösbar, damit das Mittel zur Inbetriebnahme entfernt werden kann. Vorzugsweise sind die Fügeverbindungen starr, das heißt ohne die Möglichkeit einer Relativbewegung zwischen dem ersten Teil des Mittels und dem gehäusefesten Bauteil und/oder zwischen dem zweiten Teil des Mittels und dem Planetenträger. Als Fügeverbindungen kommen etwa Schraubverbindungen infrage.

Erfindungsgemäß weist das Mittel mindestens ein Lager auf. Mittels des Lagers sind der erste Teil und der zweite Teil drehbar ineinander gelagert. Insbesondere sind der erste Teil und der zweite Teil relativ zueinander drehbar. Dadurch lässt sich auch der Planetenträger relativ zu dem gehäusefesten Bauteil bzw. relativ zu dem Gehäuse verdrehen, wenn das Mittel montiert ist, das heißt, wenn der erste Teil mit dem gehäusefesten Bauteil und der zweite Teil mit dem Planetenträger gefügt sind.

Durch die Verdrehbarkeit des Planetenträgers lassen sich Standschäden während des Transports vermeiden. Zudem ist es möglich, die Winkellage des Planetenträgers relativ zu anderen Bauteilen auszurichten. Dies erleichtert die Montage und Inbetriebnahme. So kann der Planetenträger etwa relativ zu einer Welle so verdreht werden, dass er sich mit der Welle, etwa einer Eingangswelle, verschrauben lässt. Die Notwendigkeit einer Verdrehung der Welle entfällt. Dies ist insbesondere dann von Vorteil, wenn eine Verdrehung der Welle mit hohem Aufwand verbunden oder gänzlich unmöglich ist.

In einer bevorzugten Weiterbildung ist der zweite Teil mit einer Schnittstelle des Planetenträgers fügbar. Dieselbe Schnittstelle ist mit der Welle fügbar. Dies impliziert, dass die Welle eine Schnittstelle aufweist, die mit der Schnittstelle des Planetenträgers fügbar ist. Der zweite Teil wiederum weist weiterbildungsgemäß eine Schnittstelle auf, die der Schnittstelle der Welle entspricht, und die ebenso mit der Schnittstelle des Planetenträgers fügbar ist. Die Weiterbildung ist insbesondere von Vorteil, wenn die Welle den Planetenträger mindestens teilweise trägt. Während des Transports tritt dann das Mittel an die Stelle der Welle und trägt den Planetenträger mindestens teilweise. Dadurch entfällt die Notwendigkeit einer zusätzliche Fixierung des Planetenträgers.

Eine Welle ist ein drehbares Mittel. Im Unterschied zu einer Achse ist die Welle ausgebildet, ein Drehmoment, das parallel zu einer Drehachse der Welle ausgerichtet ist, zu übertragen.

Der erste Teil und/oder der zweite Teil des Mittels sind bevorzugt einstückig weitergebildet. Dadurch ergibt sich ein besonders einfacher Aufbau des Mittels.

Der Planetenträger ist bevorzugt relativ zu dem gehäusefesten Bauteil bzw. dem Gehäuse drehbar. In einer bevorzugten Weiterbildung ist eine Drehachse des Lagers, mit dem der erste Teil und der zweite Teil des Mittels drehbar ineinander gelagert sind, und eine Drehachse des Planetenträgers identisch.

Der erste Teil des Mittels ist bevorzugt mit einem Schraubflansch weitergebildet. Dieser dient dazu, den ersten Teil mit dem gehäusefesten Bauteil zu verschrauben. Der Schraubflansch des ersten Teils wird dabei mit dem gehäusefesten Bauteil verschraubt. Dies impliziert, dass das gehäusefeste Bauteil einen entsprechenden Schraubflansch aufweist, mit dem der Schraubflansch des ersten Teil verschraubt wird.

Auch der zweite Teil ist bevorzugt mit einem Schraubflansch weitergebildet. Dieser dient dazu, den zweiten Teil mit dem Planetenträger zu verschrauben. Der Schraubflansch des zweiten Teils wird dabei mit dem Planetenträger verschraubt. Der Planetenträger muss dazu einen entsprechenden Schraubflansch aufweisen, mit dem der Schraubflansch des zweiten Teils verschraubt wird.

Der zweite Teil des Mittels ist bevorzugt mit einer Achse weitergebildet. Eine Achse ist ein drehbar gelagertes Bauteil, das im Unterschied zu einer Welle keinerlei Drehmoment in Richtung seiner Drehachse überträgt. Die Achse des zweiten Teils ist mittels des Lagers drehbar in einem Lagersitz des ersten Teils gelagert. Der erste Teil ist weiterbildungsgemäß also über die Achse drehbar in dem ersten Teil bzw. in dessen Lagersitz gelagert.

Bevorzugt ist darüber hinaus der erste Teil mit einem scheibenförmigen Abschnitt weitergebildet. Dieser verbindet den oben genannten Schraubflansch des ersten Teils und den Lagersitz miteinander. Vorzugsweise verläuft der scheibenförmige Abschnitt ausgehend von dem Lagersitz in Richtung des Schraubflansches bezüglich mindestens einer der oben genannten Drehachsen radial nach außen hin.

Auch der zweite Teil ist bevorzugt mit einem scheibenförmigen Abschnitt weitergebildet. Dieser verbindet den Schraubflansch des zweiten Teils und die oben genannte Achse miteinander. Vorzugsweise verläuft der scheibenförmige Abschnitt des zweiten Teils ausgehend von der Achse bezüglich mindestens einer der oben genannten Drehachsen radial nach außen in Richtung des Schraubflansches des zweiten Teils.

Eine erfindungsgemäße Anordnung umfasst das oben genannte gehäusefeste Bauteil, den oben genannten Planetenträger und das erfindungsgemäße Mittel oder eine bevorzugte Weiterbildung. Bei der Anordnung handelt es sich bevorzugt um ein Getriebe, etwa ein Windkraftgetriebe. Der erste Teil des Mittels ist, wie oben beschrieben, mit dem gehäusefesten Bauteil gefügt. Der zweite Teil des Mittels ist, wie ebenso oben beschrieben, mit dem Planetenträger gefügt.

Ein erfindungsgemäßes Verfahren dient zur Demontage des Mittels der erfindungsgemäßen Anordnung. Vor Ausführung der Schritte des erfindungsgemäßen Verfahrens ist der erste Teil des Mittels mit dem gehäusefesten Bauteil und der zweite Teil des Mittels mit dem Planetenträger gefügt. Das Verfahren sieht vor, dass der erste Teil des Mittels von dem gehäusefesten Bauteil und der zweite Teil des Mittels von dem Planetenträger gelöst wird. Erfindungsgemäß werden also die Fügeverbindungen zwischen dem ersten Teil des Mittels und dem gehäusefesten Bauteil sowie zwischen dem zweiten Teil des Mittels und dem Planetenträger gelöst. Nachdem die beiden Teile des Mittels gelöst wurden, kann das Mittel entnommen werden, um die erfindungsgemäße Anordnung in Betrieb zu nehmen.

Eine bevorzugte Weiterbildung des Verfahrens sieht vor, dass der erste Teil und der zweite Teil des Mittels relativ zu einander verdreht werden. Dies geschieht bevorzugt, während der Planetenträger mit dem Mittel in dem gehäusefesten Bauteil gesichert ist, während also der erste Mittels mit dem gehäusefesten Bauteil und der zweite Teil des Mittels mit dem Planetenträger gefügt ist. Dies bedeutet, dass der erste Teil und der zweite Teil relativ zueinander vor Durchführung der erfindungsgemäßen Löseschritte verdreht werden. Die Verdrehung der beiden Teile des Mittels vor Durchführung der erfindungsgemäßen Löseschritte geht einher mit einer Verdrehung des Planetenträgers relativ zu dem gehäusefesten Bauteil. Das Mittel nimmt dabei mindestens einen Teil der Gewichtskraft des Planetenträgers auf. Durch eine solche Verdrehung lässt sich der Planetenträger geeignet positionieren, um etwa weitere Schritte zur Inbetriebnahme der Anordnung durchführen zu können.

Eine darüber hinaus bevorzugte Weiterbildung des Verfahrens bezieht sich auf eine Anordnung, dessen Planetenträger mit einer Schnittstelle weitergebildet ist. Der zweite Teil des Mittels ist, wie eingangs beschrieben, mit der Schnittstelle des Planetenträgers fügbar. Darüber hinaus ist Welle vorgesehen, die, wie eingangs beschrieben, mit der Schnittstelle des Planetenträgers fügbar ist. Weiterbildungsgemäß wird der zweite Teil des Mittels von der Schnittstelle des Planetenträgers gelöst, bevor die Schnittstelle mit der Welle gefügt wird. Bevorzugt wird der Planetenträger dabei so verdreht, dass seine Schnittstelle mit der Welle fügbar ist. Bevorzugt geschieht dies vor dem Lösen des zweiten Teils von der Schnittstelle des Planetenträgers und vor dem Lösen des ersten Teils von dem gehäusefesten Bauteil, sodass der Planetenträger mit dem zweiten Teil in dem ersten Teil und dem gehäusefesten Bauteil verdreht wird.

Durch entgegengesetzte Ausführung des erfindungsgemäßen Verfahrens oder einer bevorzugten Weiterbildung lässt sich das Mittel montieren. Zu Beginn der Ausführung eines solchen Verfahrens sind der erste Teil und der zweite Teil des Mittels nicht mit der Anordnung oder mit Teilen davon gefügt. Das Verfahren sieht vor, dass der erste Teil des Mittels mit dem gehäusefesten Bauteil und der zweite Teil des Mittels mit dem Planetenträger gefügt werden. Hiernach ermöglicht das Mittel, das gehäusefeste Bauteil und den Planetenträger relativ zueinander zu verdrehen, etwa um Standschäden zu vermeiden. Eine Verdrehung des ersten Teils und des zweiten Teils relativ zueinander ist nicht notwendig, um das Mittel montieren zu können.

Stattdessen können der erste Teil und der zweite Teil des Mittels vor der Montage relativ zueinander geeignet verdreht werden.

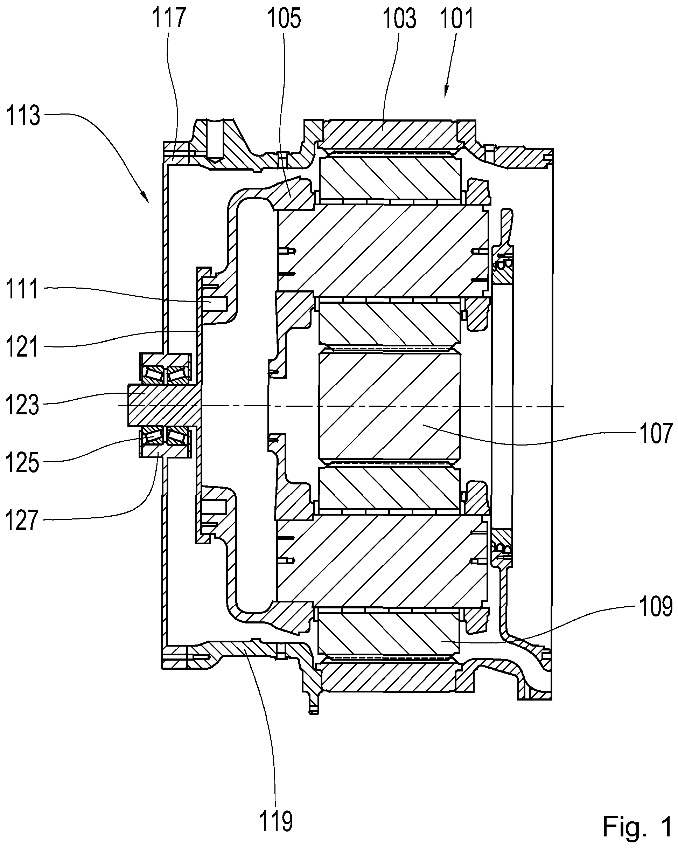

Ein bevorzugtes Ausführungsbeispiel der Erfindung ist in Figur 1 dargestellt. Im Einzelnen zeigt:
Figur 1 einen Ausschnitt eines Windkraftgetriebes.

Das Windkraftgetriebe weist eine eingangsseitig angeordnete Planetenstufe 101 auf. Zu der Planetenstufe 101 gehören ein gehäusefestes Hohlrad 103, ein drehbar gelagerter Planetenträger 105 und ein drehbar gelagertes Sonnenrad 107. In dem Planetenträger 105 sind Planetenräder 109 drehbar gelagert, die jeweils mit dem Hohlrad 103 und dem Sonnenrad 107 kämmen.

Der Planetenträger 105 bildet einen Schraubflansch 111 aus. Dieser dient dazu, den Planetenträger 105 drehfest mit einer Eingangswelle zu verbinden. Der Planetenträger 105 weist keine eigene Lagerung auf und wird stattdessen von der Eingangswelle gestützt. Da der Transport des Getriebes ohne die Eingangswelle erfolgt, ist eine Transportsicherung 113 erforderlich.

Ein erster Teil 117 der Transportsicherung 113 ist mit einem Gehäuse 119 des Getriebes verschraubt. Ein zweiter Teil 121 ist mit dem Flansch 111 des Planetenträgers 105 verschraubt. Der zweite Teil 121 weist eine Achse 123 auf, die mittels eines Lagers 125 drehbar in einem von dem ersten Teil 117 ausgebildeten Lagersitz 127 gelagert ist.

### Bezugszeichen

- 101: Planetenstufe
- 103: Hohlrad
- 105: Planetenträger
- 107: Sonnenrad
- 109: Planetenrad
- 111: Schraubflansch
- 113: Transportsicherung
- 117: erster Teil der Transportsicherung
- 119: Gehäuse
- 121: zweiter Teil der Transportsicherung
- 123: Achse
- 125: Lager
- 127: Lagersitz

## Patentansprüche

1. Mittel (113) zur Fixierung eines Planetenträgers (105) eines Planetengetriebes während des Transports in einem gehäusefesten Bauteil (119); wobei
ein erster Teil (117) des Mittels (113) mit dem gehäusefesten Bauteil (119) und ein zweiter Teil (121) des Mittels (113) mit dem Planetenträger (105) fügbar ist; **gekennzeichnet durch**
mindestens ein Lager (125), mit dem der erste Teil (117) und der zweite Teil (121) drehbar ineinander gelagert sind.

2. Mittel (113) nach Anspruch 1; **dadurch gekennzeichnet, dass**
der zweite Teil (121) mit einer Schnittstelle (111) des Planetenträgers (105) fügbar ist; wobei
die Schnittstelle (111) mit einer Welle fügbar ist.

3. Mittel (113) nach einem der vorhergehenden Ansprüche; **dadurch gekennzeichnet, dass**
der erste Teil (117) und/oder der zweite Teil (121) einstückig ausgeführt sind.

4. Mittel (113) nach einem der vorhergehenden Ansprüche; **dadurch gekennzeichnet, dass**
eine Drehachse des Lagers (125) und eine Drehachse des Planetenträgers (105) identisch sind.

5. Mittel (113) nach einem der vorhergehenden Ansprüche; **dadurch gekennzeichnet, dass**
der erste Teil (117) einen Schraubflansch zum Verschrauben mit dem gehäusefesten Bauteil (119) aufweist.

6. Mittel (113) nach einem der vorhergehenden Ansprüche; **dadurch gekennzeichnet, dass**
der zweite Teil (121) einen Schraubflansch zum Verschrauben mit dem Planetenträger (105) aufweist.

7. Mittel (113) nach einem der vorhergehenden Ansprüche; **dadurch gekennzeichnet, dass**
eine Achse (123) des zweiten Teils (121) mittels des Lagers (125) drehbar in einem Lagersitz des ersten Teils (117) gelagert ist.

8. Mittel (113) nach dem vorhergehenden Anspruch unter Rückbezug auf Anspruch 5; **dadurch gekennzeichnet, dass**
der erste Teil (117) einen scheibenförmigen Abschnitt aufweist, der den Schraubflansch und den Lagersitz des ersten Teils (117) miteinander verbindet.

9. Mittel (113) nach einem der vorhergehenden zwei Ansprüche unter Rückbezug auf Anspruch 6; **dadurch gekennzeichnet, dass**
der zweite Teil (121) einen scheibenförmigen Abschnitt aufweist, der den Schraubflansch und die Achse (123) des zweiten Teils (121) miteinander verbindet.

10. Anordnung mit einem gehäusefesten Bauteil (119) und einem Planetenträger (105); **gekennzeichnet durch**
ein Mittel (113) nach einem der vorhergehenden Ansprüche; wobei der erste Teil (117) des Mittels (113) mit dem gehäusefesten Bauteil (119) und der zweite Teil (121) des Mittels (113) mit dem Planetenträger (105) gefügt ist.

11. Verfahren zur Demontage des Mittels (113) einer Anordnung nach dem vorhergehenden Anspruch; mit den Schritten
- Lösen des ersten Teils (117) des Mittels (113) von dem gehäusefesten Bauteil (119);
- Lösen des zweiten Teils (121) des Mittels (113) von dem Planetenträger (105).

12. Verfahren nach dem vorhergehenden Anspruch; mit dem Schritt
- Verdrehen des ersten Teils (117) und des zweiten Teils (121) relativ zueinander.

13. Verfahren nach einem der vorhergehenden Verfahrensansprüche; **dadurch gekennzeichnet, dass**
die Anordnung ein Mittel (113) nach einem der Ansprüche 2 bis 9 aufweist; mit dem Schritten
- Lösen des zweiten Teils (121) von der Schnittstelle (111); und
- Fügen der Schnittstelle (111) mit einer Welle.

## Claims

1. Means (113) for fixing a planet carrier (105) of a planetary transmission in a component (119) during transport, said component being fixed with respect to a housing; wherein
a first part (117) of the means (113) is able to be joined to the component (119) fixed with respect to the housing and a second part (121) of the means (113) is able to be joined to the planet carrier (105); **characterized by**
at least one bearing (125) by which the first part (117) and the second part (121) are mounted one inside the other in a rotatable manner.

2. Means (113) according to Claim 1; **characterized in that**
the second part (121) is able to be joined to an interface (111) of the planet carrier (105); wherein
the interface (111) is able to be joined to a shaft.

3. Means (113) according to either of the preceding claims; **characterized in that**
the first part (117) and/or the second part (121) are/is formed as a single piece.

4. Means (113) according to one of the preceding claims; **characterized in that**
an axis of rotation of the bearing (125) and an axis of rotation of the planet carrier (105) are identical.

5. Means (113) according to one of the preceding claims; **characterized in that**
the first part (117) has a screw-connection flange for screw-connection to the component (119) fixed with respect to the housing.

6. Means (113) according to one of the preceding claims; **characterized in that**
the second part (121) has a screw-connection flange for screw-connection to the planet carrier (105).

7. Means (113) according to one of the preceding claims; **characterized in that**
a pin (123) of the second part (121) is mounted in a rotatable manner in a bearing seat of the first part (117) by means of the bearing (125).

8. Means (113) according to the preceding claim where referred back to Claim 5; **characterized in that**
the first part (117) has a disc-shaped portion which connects the screw-connection flange and the bearing seat of the first part (117) to one another.

9. Means (113) according to either of the preceding two claims where referred back to Claim 6; **characterized in that**
the second part (121) has a disc-shaped portion which connects the screw-connection flange and the pin (123) of the second part (121) to one another.

10. Arrangement having a component (119) which is fixed with respect to a housing and having a planet carrier (105); **characterized by**
a means (113) according to one of the preceding claims; wherein
the first part (117) of the means (113) is joined to the component (119) fixed with respect to the housing and the second part (121) of the means (113) is joined to the planet carrier (105).

11. Method for dismounting the means (113) of an arrangement according to the preceding claim; comprising the steps of
- detaching the first part (117) of the means (113) from the component (119) fixed with respect to the housing;
- detaching the second part (121) of the means (113) from the planet carrier (105);

12. Method according to the preceding claim; comprising the step of
- rotating the first part (117) and the second part (121) relative to one another.

13. Method according to either of the preceding method claims; **characterized in that**
the arrangement has a means (113) according to one of Claims 2 to 9; comprising the steps of
- detaching the second part (121) from the interface (111); and
- joining the interface (111) to a shaft.

## Revendications

1. Moyen (113) pour fixer un porte-satellites (105) d'un engrenage planétaire pendant le transport dans un composant (119) solidaire du boîtier ;
une première partie (117) du moyen (113) pouvant être assemblée avec le composant solidaire du boîtier (119) et une deuxième partie (121) du moyen (113) pouvant être assemblée avec le porte-satellites (105) ; **caractérisé par**
au moins un palier (125) avec lequel la première partie (117) et la deuxième partie (121) sont montées à rotation l'une dans l'autre.

2. Moyen (113) selon la revendication 1 ; **caractérisé en ce que**
la deuxième partie (121) peut être assemblée à une interface (111) du porte-satellites (105) ;
l'interface (111) pouvant être assemblée à un arbre.

3. Moyen (113) selon l'une quelconque des revendications précédentes ; **caractérisé en ce que**
la première partie (117) et/ou la deuxième partie (121) sont réalisées d'un seul tenant.

4. Moyen (113) selon l'une quelconque des revendications précédentes ; **caractérisé en ce que**
un axe de rotation du palier (125) et un axe de rotation du porte-satellites (105) sont identiques.

5. Moyen (113) selon l'une quelconque des revendications précédentes ; **caractérisé en ce que**
la première partie (117) présente une bride à vis pour le vissage avec le composant solidaire du boîtier (119).

6. Moyen (113) selon l'une quelconque des revendications précédentes ; **caractérisé en ce que**
la deuxième partie (121) présente une bride à vis pour le vissage avec le porte-satellites (105).

7. Moyen (113) selon l'une quelconque des revendications précédentes ; **caractérisé en ce que**
un axe (123) de la deuxième partie (121) est monté à rotation dans un siège de palier de la première partie (117) au moyen du palier (125).

8. Moyen (113) selon la revendication précédente, en référence à la revendication 5 ; **caractérisé en ce que**
la première partie (117) présente une section en forme de disque qui relie entre eux la bride à vis et le siège de palier de la première partie (117).

9. Moyen (113) selon l'une quelconque des deux revendications précédentes, en référence à la revendication 6 ; **caractérisé en ce que**
la deuxième partie (121) présente une section en forme de disque qui relie entre eux la bride à vis et l'axe (123) de la deuxième partie (121).

10. Agencement avec un composant (119) solidaire du boîtier et un porte-satellites (105) ; **caractérisé par** un moyen (113) selon l'une quelconque des revendications précédentes ;
la première partie (117) du moyen (113) étant assemblée au composant solidaire du boîtier (119) et la deuxième partie (121) du moyen (113) étant assemblée au porte-satellites (105).

11. Procédé de démontage du moyen (113) d'un agencement selon la revendication précédente ; avec les étapes suivantes :
- le détachement de la première partie (117) du moyen (113) du composant solidaire du boîtier (119) ;
- le détachement de la deuxième partie (121) du moyen (113) du porte-satellites (105).

12. Procédé selon la revendication précédente ; avec l'étape suivante :
- la rotation de la première partie (117) et de la deuxième partie (121) l'une par rapport à l'autre.

13. Procédé selon l'une quelconque des revendications de procédé précédentes ; **caractérisé en ce que**
l'agencement présente un moyen (113) selon l'une quelconque des revendications 2 à 9 ; avec les étapes suivantes :
- le détachement de la deuxième partie (121) de l'interface (111) ; et
- l'assemblage de l'interface (111) avec un arbre.
